(19) Europäisches Patentamt
European Patent Office
Office européen des brevets

(11) Veröffentlichungsnummer: **0 257 533 B1**

(12) **EUROPÄISCHE PATENTSCHRIFT**

(45) Veröffentlichungstag der Patentschrift: **19.01.94**

(51) Int. Cl.[5]: **A01N 25/30**, A01N 25/04

(21) Anmeldenummer: **87112003.6**

(22) Anmeldetag: **19.08.87**

# (54) Wässrige fungizide Dispersionen.

(30) Priorität: **22.08.86 DE 3628575**

(43) Veröffentlichungstag der Anmeldung:
**02.03.88 Patentblatt 88/09**

(45) Bekanntmachung des Hinweises auf die Patenterteilung:
**19.01.94 Patentblatt 94/03**

(84) Benannte Vertragsstaaten:
**AT BE CH DE ES FR GB GR IT LI NL SE**

(56) Entgegenhaltungen:
**EP-A- 0 006 348**
**EP-A- 0 173 964**
**DE-A- 3 011 611**
**DE-A- 3 210 869**

**C.R. WORTHING et al.: PESTICIDE MANUAL, 7. Auflage, 1983, Seiten 339-340,564, British Crop Protection Council, Croydon, GB;**

(73) Patentinhaber: **HOECHST AKTIENGESELLSCHAFT**

**D-65926 Frankfurt(DE)**

(72) Erfinder: **Frisch, Gerhard, Dr.**
**Westerwaldstrasse 7**
**D-6393 Wehrheim(DE)**

**EP 0 257 533 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, Fungizide vom Typ der Dithiocarbamate alleine oder in Kombination mit anderen Fungiziden wie Triphenylzinnderivaten in Form von benetzbaren Pulvern (WP) auszubringen. WP-Formulierungen weisen jedoch Nachteile, bei der Anwendung auf: sie stauben häufig stark und müssen vor der Applikation meist angeteigt werden.

Im Handel sind zwar wäßrige Dispersionen von Dithiocarbamaten (meist in Kombination mit Triphenylzinnderivaten) erhältlich. Diese besitzen jedoch nur geringe Lagerstabilitäten. Außerdem werden häufig phytotoxische Nebenwirkungen bei Applikation dieser Formulierungen auf die Kulturpflanzen beobachtet.

Überraschenderweise wurde nun gefunden, daß bei Verwendung einer ausgewählten Tensidkombination stabile Formulierungen von Dithiocarbamaten oder deren Wirkstoffkombinationen mit Triphenylzinnderivaten erhalten werden.

Gegenstand den vorliegenden Erfindung sind daher wäßrige fungizide Mittel auf der Basis von Dithiocarbamaten als Wirkstoff, dadurch gekennzeichnet, daß sie als Tenside eine Kombination von Ethylenoxid-Propylenoxid-Blockpolymeren (Typ A) mit Alkanolen oder Arylphenolen, die ethoxyliert und phosphatiert sind oder deren Salze (Typ B) enthalten.

Als Dithiocarbamat-Wirkstoff lassen sich erfindungsgemäß einsetzen die Fungizide Maneb, (Manganethylenbisdithiocarbamat, Mancozeb (Manganethylenbisdithiocarbamat-Komplex mit Zink) oder Zineb (Zinkethylenbisdithiocarbamat), insbesondere Maneb. Diese Wirkstoffe sind in "The Pesticide Manual", 7. Aufl. S. 339, 340, 564 (1983), British Crop. Protection Council beschrieben.

Als Ethylenoxid-Propylenoxid-Blockpolymere (Typ A) lassen sich Polymere mit einem Molekulargewicht von 1000 - 20 000 verwenden, beispielsweise die Polymeren der folgenden Formeln I und II:

$$RO-(CH_2-CH_2-O)_x-(\underset{CH_3}{CH}-CH_2-O)_z-R \qquad (I)$$

$$RO-(CH_2-CH_2-O)_x-(\underset{CH_3}{CH}-CH_2-O)_y-(CH_2-CH_2O)_z-R \qquad (II),$$

wobei jeweils x, y und z unabhängige voneinander eine Zahl von 2 bis 200 und R = H oder ($C_1$-$C_{10}$)Alkyl bedeuten. Genannt seien als Vertreter für diese Polymeren die Handelsprodukte HOE S 3510 und HOE S 1816 der Hoechst AG.

Ferner können als Tenside vom Typ B eingesetzt werden Tenside der Soprophor-Reihe: ®Soprophor PA (15-35), Fa. Rhône Poulenc (= ethoxyliertes phosphatiertes Alkanol), ®Hostaphate, Fa. Hoechst AG (= Gemische aus Mono, Di- und Trialkylpolyglykoletherphosphaten), Typen der Preparation 10 D 12 Reihe, Fa. Rhône Poulenc (= phosphatiertes Distyrylphenoloxethylat), ®Soprophor FL, Fa. Rhône Poulenc (= Triethanolammoniumsalze von phosphatierten Tristyrylphenoxethylaten).

Bezogen auf die gesamte Formulierung können die Tensidkonzentrationen innerhalb folgender Grenzen variieren:

Typ A : 1 - 10 Gew.-%, vorzugsweise 2 - 7 Gew.-%

Typ B : 0,1 - 5 Gew.-%, vorzugsweise 0,3 - 2,5 Gew.-%

Die erfindungsgemäßen Formulierungen können als Wirkstoff-Kombinationspartner für die Dithiocarbamate insbesondere Triphenylzinnderivate wie Triphenylzinnhydroxid (TPTH) oder Triphenylzinnacetat (TPTA), bevorzugt TPTH, enthalten.

Im Falle dieser Kombinationen ist es zweckmäßig, zusätzlich zu den genannten Tensiden vom Typ A, B noch folgende Tenside zu verwenden: Kondensationsprodukte aus Naphthalinsulfonsäure und Formaldehyd (Typ C) wie ®Dispersogen A (Fa. BASF) und ein Gemisch, insbesondere 1:1 Gemisch, aus Ligninsulfonaten, insbesondere Na-Ligninsulfonat, mit Montmorillionit (Typ D) beispielsweise ®Darvan Nr. 3 (Fa. Vanderbilt, USA). Die Formulierungen enthalten dann neben den Tensiden A, B mit dne obengenannten Gewichtsanteilen noch bevorzugt 0,1 bis 3 Gew.-% Tenside vom Typ C und 0,1 bis 4 Gew.-%, inbesondere 0,1 - 2,0 Gew.-% Tenside vom Typ D.

Das Gewichtsverhältnis von Dithiocarbamat zu Triphenylzinnderivat kann zwischen 20:1 und 1:20, insbesondere zwischen 1:20 und 10:1 variieren.

Der Gesamtwirkstoffgehalt in den erfindungsgemäßen Dispersionen kann 10 bis 70 Gew.-%, vorzugsweise 20 bis 50 Gew.-%, betragen.

Den Dispersionen können außerdem noch übliche Zusatzstoffe z.B. Entschäumer wie Silikonentschäumer SE 2 (Fa. Wacker) Frostschutzmittel wie ($C_2$-$C_3$)Alkylenglykole. Harnstoff oder Glycerin oder Verdikkungsmittel wie quellfähige Alumosilikate, Polysaccharide oder Xanthanderivate zugegeben werden.

Die wäßrigen stabilen Formulierungen lassen sich herstellen, indem man Wasser, die erfindungsgemäße Tensidkombination sowie den oder die Wirkstoffe zu einer sogenannten Vormischung zusammengibt, und diese dann mittels Perl- und/oder Kugel- und/oder Kolloidmühlen naßvermahlt.

Die Erfindung wird durch nachfolgende Beispiele, die in Tabelle I zusammengefaßt sind, erläutert.

Die Zahlenangaben bedeuten teilweise Gew.-%.

Tabelle 1

| | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Maneb | 32 | 32 | 32 | 32 | 32 | 32 | 32 | 32 | 32 | 30,7 | 30,7 | 30,7 | 30,7 | 8,9 | 8,9 |
| Zineb | | | | | | | | | | | | | | | |
| Mancozeb | | | | | | | | | | | | | | | |
| TPTH | 9,6 | 9,6 | 9,6 | 9,6 | 9,6 | 9,6 | 9,6 | 9,6 | 9,6 | 3,9 | 3,9 | 4 | 4 | 23,5 | 23,5 |
| Hoe S 1816 | 5 | 2 | - | 4,5 | 5 | 5 | 4 | 5 | 3 | 3 | 5 | 6 | 7 | 5 | 5 |
| (R)Soprophor PA(15-35) | 1 | 1 | 1 | | | 1 | 1 | | | | | 2 | 1,5 | 1 | 2,5 |
| (R)Darvan Nr. 3 | 1 | 1 | 1 | 1 | 1 | 1,5 | 1 | 1 | 1 | 1 | 1 | 1 | 1 | 1 | 1 |
| (R)Dispersogen A | 1 | 1 | 1 | 1 | 1,2 | 1 | 1 | 2 | 1 | 1 | 0,5 | 0,5 | 1 | 1 | 1 |
| (R)Hostaphat | | | | | 2 | 1 | | 2 | 2 | 2 | 2 | | | | |
| KL- 340 N | | | | | | | | | | | | | | | |
| Preparation | | | | 1 | | | 1 | | | | | | | | |
| 10 D 12 | | | | | | | | | | | | | | | |
| Hoe S 3510 | | | 5 | | | | 1 | | | | | | | | |
| Entschäumer SE 2 | 2 | 3 | 2 | 2 | 2 | 3 | 1,5 | 2 | 2 | 2 | 2 | 2 | 2 | 2 | 2 |
| Ethylenglykol | 8 | 8 | 8 | 8 | 8 | 8 | 7 | 8 | 8 | 8 | 8 | 8 | 8 | 8 | 8 |
| (R)Rhodopol 23 | 0,1 | 0,1 | 0,1 | 0,1 | 0,1 | 0,1 | 0,1 | 0,1 | 0,1 | 0,1 | 0,1 | 0,1 | 0,1 | 0,1 | 0,1 |
| Wasser | | | | | | | | | | | | | | | |
| ad. 100% | | | | | | | | | | | | | | | |

Tabelle 1

| | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|
| Maneb | 8,9 | | | | | 38 | 38 | 38 | 57 | 51 | 47 | 45 | 45 | 45 | 45 | 45 | 37 |
| Zineb | | 30 | 32 | | 22 | | | | | | | | | | | | |
| Mancozeb | | | | 5 | | | | | | | | | | | | | |
| TPTH | 8,9 | 4 | 9 | 24 | | | | | | | | | | | | | |
| Hoe S 1816 | 3 | 6 | 5 | 5 | 5 | 5 | 2 | 5 | 5 | 5 | 5 | 2 | 5 | 3 | 5 | 4 | 4 |
| (R)Soprophor PA (15-35) | | 2 | 1,5 | 2 | | 1 | | | | | | | 0,3 | | 1 | 2 | 1 |
| (R)Darvan Nr. 3 | 0,5 | 1 | 1 | 1 | 0,5 | 0,1 | | | | | | | | | | | |
| (R)Dispersogen A | 1 | 1 | 1 | 1 | 0,5 | 0,1 | | | | | | | | | | | |
| (R)Hostaphat | 2 | | | | | | 1 | | | | | 1 | | | | | |
| KL- 340 N | | | | | | | | | | | | | | | | | |
| Preparation | | | | | 1 | | | 1 | 1 | 1 | 1,5 | | | 1 | | | 1 |
| 10 D 12 | | | | | | | | | | | | | | | | | |
| Hoe S 3510 | 1 | | | | | | | | | | | | | | | | |
| Entschäumer SE 2 | 2 | 2 | 2 | 2 | 1 | 2 | 2 | 2 | 2 | 2 | 2 | 2 | 2 | 2 | 1,5 | 1,5 | 1,5 |
| Glyzerin | 6 | 6 | 8 | 8 | 8 | 8 | 8 | 8 | 8 | 8 | 8 | 10 | 8 | 8 | 8 | 8 | 8 |
| (R)Rhodopol 23 | 0,1 | 0,1 | 0,1 | 0,1 | 0,1 | 0,1 | 0,1 | 0,1 | 0,05 | 0,1 | 0,1 | 0,1 | 0,1 | 0,1 | 0,1 | 0,1 | 0,1 |
| Wasser | | | | | | | | | | | | | | | | | |
| ad. 100% | | | | | | | | | | | | | | | | | |

**Patentansprüche**

**Patentansprüche für folgende Vertragsstaaten : AT, BE, CH, DE, FR, GB, GR, IT, LI, NL, SE**

**1.** Wäßrige fungizide Mittel auf der Basis Von Maneb, Mancozeb oder Zineb als Wirkstoff, dadurch gekennzeichnet, daß der Gesamtwirkstoffgehalt 10 bis 70 Gew.-% beträgt und daß sie als Tenside eine Kombination von 1 - 10 Gew.-% Blockpolymeren der Formeln I oder II

$$RO-(CH_2-CH_2-O)_x-(\underset{\displaystyle CH_3}{\underset{|}{C}}H-CH_2-O)_z-R \qquad (I)$$

$$RO-(CH_2-CH_2-O)_x-(\underset{\displaystyle CH_3}{\underset{|}{C}}H-CH_2-O)_y-(CH_2-CH_2O)_z-R \qquad (II),$$

wobei jeweils x, y und z unabhängig voneinander eine Zahl von 2 bis 200 und R = H oder ($C_1$-$C_{10}$)Alkyl bedeuten, und 0,1 - 5 Gew.-% ethoxylierter und phosphatierter Alkanole oder Arylphenole oder deren Salze enthalten.

**2.** Mittel gemäß Anspruch 1, dadurch gekennzeichnet, daß sie neben Maneb, Mancozeb oder Zineb als Wirkstoffe Triphenylzinnderivate enthalten.

**3.** Mittel gemäß Anspruch 2, dadurch gekennzeichnet, daß sie als Triphenylzinnderivate Triphenylzinnhydroxid oder Triphenylzinnacetat enthalten.

**4.** Mittel gemäß den Ansprüchen 2 oder 3, dadurch gekennzeichnet, daß sie als Tenside zusätzlich Kondensationsprodukte aus Naphthalinsulfonsäure und Formaldehyd und Gemische aus Ligninsulfonaten mit Montmorillionit enthalten.

**5.** Mittel gemäß den Ansprüchen 1 bis 4, dadurch gekennzeichnet, daß sie zusätzlich 0,1 bis 3 Gew.-% Kondensationsprodukte aus Naphthalinsulfonsäure und Formaldehyd und 0,1 bis 4 Gew.-% eines Gemisches von Ligninsulfonaten mit Montmorillionit enthalten.

**6.** Verfahren zur Bekämpfung von Schadpilzen, dadurch gekennzeichnet, daß man ein fungizides Mittel gemäß den Ansprüchen 1 bis 5 nach für den Anwendungszweck üblicher Verdünnung auf die Pflanzen oder deren Anbauflächen appliziert.

**Patentansprüche für folgenden Vertragsstaat : ES**

**1.** Verfahren zur Herstellung wäßriger fungizider Mittel auf der Basis von Maneb, Mancozeb oder Zineb als Wirkstoff, worin der Gesamtwirkstoffgehalt 10 bis 70 Gew.-% beträgt und als Tenside eine Kombination von 1 - 10 Gew.-% Blockpolymeren der Formeln I oder II

$$RO-(CH_2-CH_2-O)_x-(\underset{\displaystyle CH_3}{\underset{|}{C}}H-CH_2-O)_z-R \qquad (I)$$

$$RO-(CH_2-CH_2-O)_x-(\underset{\displaystyle CH_3}{\underset{|}{C}}H-CH_2-O)_y-(CH_2-CH_2O)_z-R \qquad (II),$$

wobei jeweils x, y und z unabhängig voneinander eine Zahl von 2 bis 200 und R = H oder ($C_1$-$C_{10}$)Alkyl bedeuten, und 0,1 - 5 Gew.-% ethoxylierter und phosphatierter Alkanole oder Arylphenole oder deren Salze enthalten sind, dadurch gekennzeichnet, daß man Wasser, die erfindungsgemäße Tensidkombination sowie den oder die Wirkstoffe zu einer sogenannten Vormischung zusammengibt, und diese dann mittels Perl- und/oder Kugel- und/oder Kolloidmühlen naßvermahlt.

**2.** Verfahren gemäß Anspruch 1, dadurch gekennzeichnet, daß Mittel hergestellt werden, die neben Maneb, Mancozeb oder Zineb als Wirkstoffe Triphenylzinnderivate enthalten.

**3.** Verfahren gemäß Anspruch 2, dadurch gekennzeichnet, daß Mittel hergestellt werden, die Triphenylzinnderivate Triphenylzinnhydroxid oder Triphenylzinnacetat enthalten.

**4.** Verfahren gemäß den Ansprüchen 2 oder 3, dadurch gekennzeichnet, daß Mittel hergestellt werden, die als Tenside zusätzlich Kondensationsprodukte aus Naphthalinsulfonsäure und Formaldehyd und Gemische aus Ligninsulfonaten mit Montmorillionit enthalten.

**5.** Verfahren gemäß den Ansprüchen 1 bis 4, dadurch gekennzeichnet, daß Mittel hergestellt werden, die zusätzlich 0,1 bis 3 Gew.-% Kondensationsprodukte aus Naphthalinsulfonsäure und Formaldehyd und 0,1 bis 4 Gew.-% eines Gemisches von Ligninsulfonaten mit Montmorillionit enthalten.

**6.** Verfahren zur Bekämpfung von Schadpilzen, dadurch gekennzeichnet, daß man ein fungizides Mittel gemäß den Ansprüchen 1 bis 5 nach für den Anwendungszweck üblicher Verdünnung auf die Pflanzen oder deren Anbauflächen appliziert.

**Claims**
**Claims for the following Contracting States : AT, BE, CH, DE, FR, GB, GR, IT, LI, NL, SE**

**1.** An aqueous, fungicidal agent based on maneb, mancozeb or zineb as active compound, wherein the total content of active substance is from 10 to 70% by weight, and which comprises, as surfactant, a combination of from 1 - 10% by weight of block polymers of the formula I or II

$$RO-(CH_2-CH_2-O)_x - (\underset{\displaystyle CH_3}{\underset{|}{C}}H-CH_2-O)_z-R \qquad (I)$$

$$RO-(CH_2-CH_2-O)_x - (\underset{\displaystyle CH_3}{\underset{|}{C}}H-CH_2-O)_y - (CH_2-CH_2O)_z-R \qquad (II),$$

where in each case x, y and z, independently of one another, denote a number from 2 to 200, and R denotes H or ($C_1$-$C_{10}$)alkyl, and from 0.1 - 5% by weight of ethoxylated and phosphated alkanols or arylphenols, or salts thereof.

**2.** An agent as claimed in claim 1, containing triphenyltin derivatives as active compounds besides maneb, mancozeb or zineb.

**3.** An agent as claimed in claim 2, containing, as triphenyltin derivative, triphenyltin hydroxide or triphenyltin acetate.

**4.** An agent as claimed in claim 2 or 3, additionally containing, as surfactants, condensation products of naphthalenesulfonic acid and formaldehyde and mixtures of ligninsulfonates with montmorillonite.

**5.** An agent as claimed in claims 1 to 4, additionally containing from 0.1 to 3% by weight of condensation products of naphthalenesulfonic acid and formaldehyde, and from 0.1 to 4% by weight of a mixture of ligninsulfonates with montmorillonite.

**6.** A method of combating fungal pests, wherein a fungicidal agent as claimed in claims 1 to 5 is applied to the plants or their cultivation areas, after dilution as conventional for the intended use.

**Claims for the following Contracting State : ES**

1. A process for the preparation of an aqueous, fungicidal agent based on maneb, mancozeb or zineb as active compound, in which the total content of active substance is from 10 to 70% by weight, and which contains, as surfactant, a combination of from 1 - 10% by weight of block polymers of the formula I or II

$$RO-(CH_2-CH_2-O)_x-(\underset{\displaystyle CH_3}{\underset{|}{C}}H-CH_2-O)_z-R \qquad (I)$$

$$RO-(CH_2-CH_2-O)_x-(\underset{\displaystyle CH_3}{\underset{|}{C}}H-CH_2-O)_y-(CH_2-CH_2O)_z-R \qquad (II),$$

where in each case x, y and z, independently of one another, denote a number from 2 to 200, and R denotes H or $(C_1-C_{10})$alkyl, and from 0.1 - 5% by weight of ethoxylated and phosphated alkanols or arylphenols, or salts thereof, which comprises combining water, the surfactant combination according to the invention and the active compound(s) to form a so-called premix, and then wet-grinding this premix using bead and/or ball and/or colloid mills.

2. The process as claimed in claim 1, which comprises preparing an agent containing triphenyltin derivatives as active compounds besides maneb, mancozeb or zineb.

3. The process as claimed in claim 2, which comprises preparing an agent containing, as triphenyltin derivative, triphenyltin hydroxide or triphenyltin acetate.

4. The process as claimed in claim 2 or 3, which comprises preparing an agent additionally containing, as surfactants, condensation products of naphthalenesulfonic acid and formaldehyde and mixtures of ligninsulfonates with montmorillonite.

5. The process as claimed in claims 1 to 4, which comprises preparing an agent additionally containing from 0.1 to 3% by weight of condensation products of naphthalenesulfonic acid and formaldehyde, and from 0.1 to 4% by weight of a mixture of ligninsulfonates with montmorillonite.

6. A method of combating fungal pests, wherein a fungicidal agent as in claims 1 to 5 is applied to the plants or their cultivation areas, after dilution as conventional for the intended use.

**Revendications**
**Revendications pour les Etats contractants suivants : AT, BE, CH, DE, FR, GB, GR, IT, LI, NL, SE**

1. Produits fongicides aqueux à base de la matière active manèbe, mancozèbe ou zinèbe, caractérisés en ce que la teneur totale en matière active est de 10 à 70 % en poids et qu'ils contiennent en tant que tensioactifs une combinaison de 1-10 % en poids de polymères séquencés ayant les formules I ou II

$$RO-(CH_2-CH_2-O)_x - (\underset{CH_3}{\underset{|}{C}}H-CH_2-O)_z-R \qquad (I)$$

$$RO-(CH_2-CH_2-O)_x - (\underset{CH_3}{\underset{|}{C}}H-CH_2-O)_y - (CH_2-CH_2O)_z-R \qquad (II),$$

où les indices x, y et z, indépendamment les uns des autres, sont chacun des nombres de 2 à 200, et R est H ou un radical alkyle en $C_1$-$C_{10}$, ainsi que 0,1 à 5 % d'alcanols ou d'arylphénols éthoxylés et phosphatés ou de leurs sels

**2.** Produits selon la revendication 1, caractérisés en ce que, outre le manèbe, le mancozèbe ou le zinèbe, ils contiennent en tant que matière active des dérivés du triphénylétain.

**3.** Produits selon la revendication 2, caractérisés en ce qu'ils contiennent en tant que dérivés du triphénylétain l'hydroxyde de triphénylétain ou l'acétate de triphénylétain.

**4.** Produits selon les revendications 2 ou 3, caractérisés en ce que, en tant que tensioactifs, ils contiennent en outre des produits de condensation de l'acide naphtalènesulfonique et du formaldéhyde, et des mélanges de ligninesulfonates et de montmorillonites.

**5.** Produits selon les revendications 1 à 4, caractérisés en ce qu'ils contiennent en outre 0,1 à 3 % en poids de produits de condensation de l'acide naphtalènesulfonique et du formaldéhyde et 0,1 à 4 % en poids d'un mélange de ligninesulfonates et de montmorillonite.

**6.** Procédé pour lutter contre les champignons nuisibles, caractérisé en ce qu'on applique sur les plantes ou sur leurs zones de culture un produit fongicide selon les revendications 1 à 5, en la dilution couramment utilisée dans les applications.

**Revendications pour l'Etat contractant suivant : ES**

**1.** Procédé pour préparer des produits fongicides aqueux à base des matières actives manèbe, mancozèbe ou zinèbe, dans lesquels la teneur totale en matière active est de 10 à 70 % en poids, et qui contiennent comme tensioactifs une combinaison de 1 à 10 % en poids de polymères séquencés de formules I ou II

$$RO-(CH_2-CH_2-O)_x - (\underset{CH_3}{\underset{|}{C}}H-CH_2-O)_z-R \qquad (I)$$

$$RO-(CH_2-CH_2-O)_x - (\underset{CH_3}{\underset{|}{C}}H-CH_2-O)_y - (CH_2-CH_2O)_z-R \qquad (II),$$

où les indices x, y et z, indépendamment les uns des autres, sont chacun des nombres de 2 à 200 et R est H ou un radical alkyle en $C_1$-$C_{10}$, et de 0,1 à 5 % en poids d'alcanols ou d'arylphénols éthoxylés et phosphatés, ou leurs sels, caractérisé en ce qu'on réunit en un prémélange de l'eau, la combinaison de tensioactifs selon l'invention, ainsi que la ou les matières actives, avant de soumettre ce prémélange à un broyage par voie humide à l'aide de broyeurs à billes et/ou à perles et/ou des moulins à

colloïdes.

2. Procédé selon la revendication 1, caractérisé en ce qu'on prépare des produits qui, outre le manèbe, le mancozèbe ou le zinèbe, contiennent en tant que matières actives des dérivés du triphénylétain.

3. Procédé selon la revendication 2, caractérisé en ce qu'on prépare des produits qui contiennent en tant que dérivés du triphénylétain l'hydroxyde de triphénylétain ou l'acétate de triphénylétain.

4. Procédé selon les revendications 2 ou 3, caractérisé en ce qu'on prépare des produits qui en tant que tensioactifs contiennent en outre des produits de condensation de l'acide naphtalènesulfonique et du formaldéhyde, et des mélanges de ligninesulfonates et de montmorillonite.

5. Procédé selon les revendications 1 à 4, caractérisés en ce qu'ils contiennent en outre 0,1 à 3 % en poids de produits de condensation de l'acide naphtalènesulfonique et du formaldéhyde et 0,1 à 4 % en poids d'un mélange de ligninesulfonates et de montmorillonites.

6. Procédé pour lutter contre les champignons nuisibles, caractérisé en ce qu'on applique sur les plantes ou sur leurs zones de culture un produit fongicide selon les revendications 1 à 5, en la dilution couramment utilisée dans les applications.